# EUROPEAN PATENT SPECIFICATION

(11) **EP 4 095 107 B1**
(45) Date of publication and mention of the grant of the patent: **19.06.2024**
(21) Application number: 22175075.5
(22) Date of filing: 24.05.2022
(51) Int. Cl.: C02F 11/10, C10B 53/00

(54) **INTEGRATED THERMOCHEMICAL PROCESS FOR THE RECOVERY OF INORGANIC RAW MATERIALS FROM RESIDUAL MATRICES**
INTEGRIERTES THERMOCHEMISCHES VERFAHREN ZUR ZURÜCKGEWINNUNG ANORGANISCHER ROHSTOFFE AUS RESTMATRIZEN
PROCÉDÉ THERMOCHIMIQUE INTÉGRÉ POUR LA RÉCUPÉRATION DE MATIÈRES PREMIÈRES INORGANIQUES À PARTIR DE MATRICES RÉSIDUELLES

(30) Priority: 25.05.2021 IT 202100013496
(43) Date of publication of application: 30.11.2022
(73) Proprietor: Consorzio per la Ricerca e la Dimostrazione sulle Energie Rinnovabili, 50038 Scarperia e San Piero (FI) (IT)
(72) Inventor: SALIMBENI, ANDREA, 50038 SCARPERIA E SAN PIERO - FIRENZE (IT); RIZZO, ANDREA MARIA, 50100 FIRENZE (IT)
(74) Representative: Nesti, Antonio

(56) References cited:
- CN-A- 111 943 474
- GB-A- 1 468 875
- PORTER JOHN ET AL: "Chromium recovery from tanning wastes by pyrolysis and sulfuric acid leaching", BUREAU OF MINES PUBLICATIONS AND ARTICLES , 1 June 1987 (1987-06-01), pages 1-135, XP055874940, Retrieved from the Internet: URL:https://www.worldcat.org/title/chromiu m-recovery-from-tanning-wastes-by-pyrolysi s-and-sulfuric-acid-leaching/oclc/11060083 [retrieved on 2022-02-14]

## Description

### Field of the invention

The finding relates to the field of thermochemical processes for the recovery of carbon and materials of potential interest from predominantly organic residual matrices, in particular from civil or industrial waste.

More in particular, the invention relates to the field of integrated thermochemical processes, designed to enhance both organic and inorganic fractions, which constitute waste, such as by way of example sewage sludge and municipal solid waste.

### Technical background

At present, pyrolysis processes of waste, or biomass, are widely known and used in numerous industrial sectors, which aim to enhance the organic matrices for example for the production of bio-oil, or biochar. However, due to the high content of inorganics (ash) present in the treated waste and concentrated in the biochar, the biochar often turns out to be a waste in turn and, therefore, disposed of as a process residue.

In sectors such as chemical-pharmaceutical, metallurgy, fertilizer production, the use of the leaching process applied to sedimentary rocks (coal, phosphate rocks, minerals) is also known. The leaching process has been adopted today, in the case of fossil coal, to reduce the ashes thereof by removing unwanted inorganics such as silicon, aluminium, sulphur. In the case of phosphate rocks, as in the case of other minerals, this process is used for the purpose of extracting from these raw materials the elements of interest contained therein (e.g., phosphorus, chromium and other metals).

At present, processes are also known which allow to recover phosphorus from waste (mainly sludge) based mainly on the incineration and subsequent leaching of the main elements from the discharge ash. This solution, however, requires that the entire cost of leaching be borne by the recovered element, to which are added the costs for the disposal of the residual solid remaining at the end of the process. For this reason it is still hardly applied at an industrial scale.

The document "Borja Oliver-Tomas, Martin Hitzl, Miko 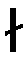 aj Owsianiak, Michael Renz, Evaluation of hydrothermal carbonization in urban mining for the recovery of phosphorus from the organic fraction of municipal solid waste, Resources, Conservation and Recycling, Volume 147, 2019, Pages 111-118, ISSN 0921-3449" describes the application of the leaching process dedicated to the extraction of phosphorus starting from hydrochar, or from the char obtained from the hydrothermal carbonization of urban organic waste. In this case there are positive results in terms of extraction of inorganics, however the hydrochar production process is different from that of pyrolysis and hydrochar, unlike biochar, is a much more volatile product and therefore of reduced quality, indicated as fuel, but unsuitable for massive use in the steel industry.

The document "100RES 2020 - Applied Energy Symposium (ICAE) 100% RENEWABLE: Strategies, technologies and challenges for a fossil free future" describes a sewage sludge conversion technology, based on the integration of a pyrolysis thermochemical treatment with a chemical leaching phase for the production of high quality biochar and high phosphorus concentration liquid. This document describes an integrated treatment of sludge and biological waste in which in a first step a slow pyrolysis thermochemical process is applied to obtain a biochar (starting from dry sludge) and, in a second step, the solid biochar obtained is processed by leaching treatment to extract inorganic elements, in particular: P, Mg, K, Ca.

However, the currently available technology has significant limitations in the efficiency and cost-effectiveness of the integrated thermochemical process due to the lack of an effective interaction between the two main process steps, pyrolysis and leaching, which, in the case of processes with pyrolysis at reduced temperatures (<400°C), in particular determines the production of a highly volatile solid biochar, with consequent high oxidation and low effectiveness as an industrial product and, in the case of processes with pyrolysis at high temperatures (>550°C), a biochar with reduced solubility of inorganic compounds and therefore low effectiveness of the reagents used in leaching and low extraction efficiency for elements of significant interest such as magnesium, phosphorus downstream of the char leaching step.

Such limits have until today reduced the potential for application for industrial purposes of thermochemical processes for the recovery of inorganic raw material from predominantly organic residual matrices.

A pyrolysis process is described in the previous document CN111943474 in which the biochar from pollen and animal manure is processed and subsequently subjected to leaching with the use of only sulphuric acid. Sulphuric acid, which allows the extraction of phosphorus, does not however allow calcium to be extracted with high efficiency, leaving the solid with a high inorganic content and therefore unsuitable for application in the steel industry, at least if applied to waste such as sewage sludge object of this invention.

Furthermore, although a wide range of pyrolysis temperatures is proposed in this publication, these temperatures are not related to the leaching step, leaving the problem of overall process efficiency unresolved.

Therefore, there is a need for a thermochemical process for the treatment of residual matrices, in particular residual organic matrices from waste, which allows an effective combined recovery of inorganic raw materials of significant economic value (such as phosphorus, calcium, silicon, magnesium, potassium, aluminium) and of the carbon contained in the treated residual matrices, even when the composition thereof varies.

CN111943474 A, GB1468875 A and "Chromium recovery from tanning wastes by pyrolysis and sulfuric acid leaching" by Porter et al describe leaching processes of pyrolysed carbon containing materials

### Object of the Invention

The present invention aims to overcome the known drawbacks and to propose an integrated process of thermochemical degradation and chemical cleavage of materials, or residual matrices which allows to recover downstream of the process, in a combined manner, carbon of biological and recycled origin of such quality (in particular high carbon content (>60%) and low ash value, indicatively less than 20%) to be used as an alternative to fossil coal in sectors such as metallurgy, energy, active carbon and biomaterials, and a precipitated compound containing inorganic raw materials with high concentrations of elements such as phosphorus, magnesium, calcium, potassium, aluminium and other elements (variable with the type of residual matrix processed) transformable to become a finished product of technical and/or economic value.

### Summary of the invention

These objects have been achieved by carrying out an integrated thermochemical process according to one of the appended claims, which includes the application of a first step of pyrolysis, or thermochemical degradation in the absence of oxygen, as a pre-treatment system of the residual matrix carried out at temperatures between approximately 400°C and 550-600°C selected based on the composition of the treated matrix, and capable of concentrating both the stable carbon present in the residual matrix, and the inorganic elements in an intermediate solid with characteristics suitable for the next treatment step

In fact, the process includes a subsequent integrated leaching step, in one or more phases, in which the solid resulting from the pyrolysis step is treated by hot leaching at temperatures preferably between 50 and 90°C, selected based at least on the pyrolysis temperature set upstream, mixing the char produced with demineralized water and a mixture of leaching reagents selected based on the inorganic substances present in the treated residual matrix and the inorganic recovery products obtainable at the end of the process.

A first advantage is that the inorganic elements of greater interest (e.g., phosphorus, potassium, magnesium, calcium, aluminium) are available downstream of the integrated process, while the organic carbon from pyrolysis is made available with a quality comparable or higher than that of a fossil coal, with ash percentages less than 20% and even between 8% and 15%, therefore suitable for use in the steel industry.

A second advantage is that the thermochemical process of the invention is integrated within a single processing system which allows in an industrially convenient manner to obtain high extraction efficiencies (by way of example > 85%) for fertilizing elements such as Ca, P, K, Mg, Al and to produce a biochar with a high carbon content (for example >65%) and reduced volatile content (for example <25%) thus compatible with fossil coals used in different industrial sectors.

A further advantage is that with the process of the invention a reduced volatility of the pyrolysis solid obtained and therefore an improved ability to recover and enhance the same in multiple industrial sectors has been observed.

A further advantage is that with the process of the invention an organic carbon from pyrolysis is obtained which is substantially free of alkali, calcium, sulphur and phosphorus products, therefore suitable for use in metallurgy

A further advantage is that the process of the invention is self-sufficient from the energy point of view allowing the exploitation in the hot leaching step of the heat produced in the previous pyrolysis step.

### List of Drawings

These and other advantages will be better understood by anyone skilled in the art from the description below and the accompanying drawings, given as nonlimiting example, in which:

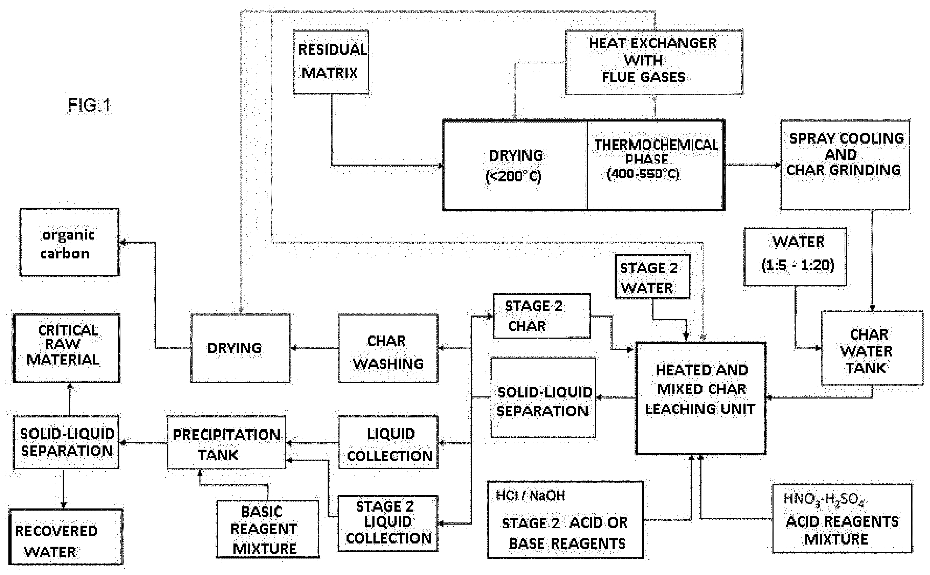

- fig. 1 shows a diagram of a preferred actuation of the process of the invention.
- fig. 2 shows the diagram of a preferred embodiment of a plant according to the invention.
- fig. 3 shows a possible control diagram of the parameters of a process according to the invention;

### Detailed description

With reference to the drawings, a preferred embodiment is described of an integrated thermochemical process for the recovery of raw materials from mainly organic waste matrices such as industrial waste or sludge.

The process comprises feeding a residual matrix, or material, Mres which is mainly organic and containing inorganic materials to be recovered with a percentage of initial ash Ain.

In order to characterize the residual matrix, the process includes a preliminary step of composition analysis.

The residual matrix is fed to a pyrolysis reactor to perform a slow pyrolysis treatment and obtain a solid char.

Preferably the pyrolysis occurs in a single reactor downstream of a pre-drying step of the matrix to a temperature below 200°C, followed by thermochemical degradation at process temperatures in a range between 400°C and 550°C, with a heating rate not exceeding approximately 40°C/minute, with a residence time between 30min and 2h, preferably between 30min and 1 h30min.

The obtained char is optionally ground to obtain ground char of average size preferably less than 1 mm and then cooled upon exit from the auger by a gravity discharge into the mixing tank with water at a temperature less than 100°C.

The ground wet char is then dropped, mixed with water to obtain a water-char mixture, for example by discharging into a reactor, mixing the char with preferably demineralized water at a process temperature in a range between 50°C and 90°C with a water-char ratio of 4:1 to 20:1 by weight.

Once the water and char mixture is obtained, the process includes a step of hot leaching the mixture by further mixing with leaching reagents.

In particular, the use of HNO3 ensures the removal of calcium, which is always present within the waste in question.

The use of HNO3 can be combined with H2SO4. However, the exclusive use of H2SO4 is not envisaged, as it leads to the production of calcium sulphate (CaSO₄), an insoluble compound and therefore no longer separable from the carbonaceous solid. The acid leaching step can be supplemented with a possible second phase with a basic reagent, e.g.,NaOH, for removing silicates and aluminates and obtaining separate leaching products. The use of HCl is adopted exclusively as a second step after a first leaching in nitric acid, as it allows to recover the aluminium and, subsequently, process the liquid with a base to precipitate aluminium chloride.

In a preferred embodiment of the invention, the process conditions are controlled so that:
- the pyrolysis temperature TP is adjusted according to the composition of the residual matrix by setting increasing values of the process range for decreasing values of the initial weight percentage of ash Ain;
- the leaching temperature TL is adjusted by setting increasing values of the process range for decreasing values of the pyrolysis temperature TP;
- the dosed quantity RL of the leaching reagents in mixture and the composition of the reagents introduced are adjusted based on the composition of the residual matrix and preferably based on the initial weight percentage of heavy metals Min and/or the initial weight percentage of calcium and phosphorus CaPin and/or the initial weight percentage of Silicon Siin and Aluminium Alin present in the residual matrix fed in pyrolysis, and based on the inorganic recovery products obtainable at the end of the process.

According to the invention, these adjustments are made in order to simultaneously obtain a high quality organic recovery carbon or low ash content (indicatively less than 20%) and low volatility (indicatively less than 25%), and inorganic products of economic or industrial interest.

More in detail, by way of example:
if the percentage of initial ash Ain is less than a predetermined threshold Ainx, preferably less than 25%, for example 20% on dry waste, the pyrolysis temperature is adjusted to maintain a higher relative value T_{PH} preferably between 450°C and 550°C and the leaching temperature TL is maintained at a lower relative value T_{LL} preferably between 50°C and 80°C, while the quantity of leaching reagents RL is adjusted to a higher relative value RLH preferably between 50% and 70% by weight of the biochar produced in pyrolysis.

In this first case
a1) if the initial percentage of calcium (CaO) and phosphorus (P2O5) oxides in the ash is greater than a threshold value CaPinx indicatively between 25 and 35% weight of the ashes present in the material, the leaching reagents are dosed to have exclusively HNO3, while for values of calcium and phosphorus oxides lower than the threshold CaPinx the leaching reagents are dosed to comprise a relative percentage of HNO3 and H2SO4 and/or HCl preferably between 20 and 50% .
b) if the percentage of initial ash Ain is greater than the predetermined threshold Ainx, the pyrolysis temperature is maintained at a lower relative value TPL preferably between 400°C and 500°C and the leaching temperature TL is maintained at a higher relative value T_{LH} preferably between 60°C and 90°C.

In this second case:
b1) if the initial percentage of Calcium and Phosphorus Oxides in the ash is greater than the threshold value CaPinx, the leaching reagents are dosed to consist exclusively of HNO3 while for initial values of Calcium and Phosphorus lower than the threshold value CaPinx, the leaching reagents are dosed to have a relative percentage of H2SO4, HCl between 20 and 50%; furthermore
b1.1) if the percentage of heavy metal oxides Min is less than a threshold value Minx approximately between 5 and 10% of the ashes present in the material, the quantity of reagents RL is adjusted to a lower relative value RLL preferably between 40% and 50% by weight of the processed biochar, while if the percentage of heavy metals Min is greater than the threshold value Minx the quantity of leaching reagents RL is adjusted to a higher relative value RLH preferably between 50% and 70% of the processed biochar.
b1.2) if the percentage of silicon oxides Siin is greater than a threshold value Siinx approximately between 25 and 35% of the ashes present in the material, the leaching step is carried out in two distinct steps in sequence:
   the first with the dosage of a quantity of acidic reagents or HNO3 adjusted to a lower relative value RLL preferably between 40% and 70% by weight of processed solid,
   the second with the dosage of a quantity of basic reagents, for example NaOH adjusted to a higher relative value RLH preferably between 50% and 200%.

Preferably, the leaching of the water-char mixture occurs for a time between 1 and 2 hours, at a temperature approximately between 50°C and 90°C, with a weight percentage of the leaching reagents between 40% and 70% by weight, preferably 0.5 and a solid-liquid ratio between 1:5 and 1:20 by weight.

Downstream of the leaching reactor, the leaching mixture is then subjected to separation of the solid phase containing leached char from the liquid phase containing the inorganic leaching liquid.

At the end of the thermochemical process described above, the obtained solid char is washed in water, e.g., at 25°C-60°C, and dried to obtain a solid organic carbon while the leaching liquid is treated in a basic reagent precipitation reactor, e.g., CaO, Ca(OH)2, NaOH, KOH, obtaining inorganic recovery material.

In a preferred mode of actuation, the process comprises a further step of activating the produced organic carbon. Such a process consists of a physical activation, without the need for chemical reagents, carried out by means of CO2 insufflation in a tubular reactor at a temperature of 900°C, for a residence time of 2 hours.

In an application example of the process, the residual matrix consists of civil or industrial sewage sludge, or urban organic waste with an initial percentage ash content of 20%, a total content of Calcium and Phosphorus oxides of 30%, a content of Silicon Oxide (Silica) of 2%, and a content of heavy metals of 5%.

In this example, a residual matrix mass equal to one ton was subjected to pyrolysis for two hours at temperatures maintained in the range 400°C-450°C, and the obtained pyrolysis char is ground and mixed with 3000-4000 litres of water to be subjected to leaching with 300-370kg of HNO3 at a leaching temperature of 60°C.

At the end of the process, 320 kg of organic carbon containing 8.5% ash, 67% carbon and less than 25% volatiles are obtained.

The liquid phase of the leaching mixture was treated with 60kg of CaOH2 in a precipitation tank and subjected to solid-liquid separation to obtain 190kg of inorganic recovery liquid comprising:

| | |
|---|---|
| P | 7-9% |
| N | 2-4% |
| Ca | 12-15% |
| Mg | 0.7-1% |
| K | 0.5-0.7% |

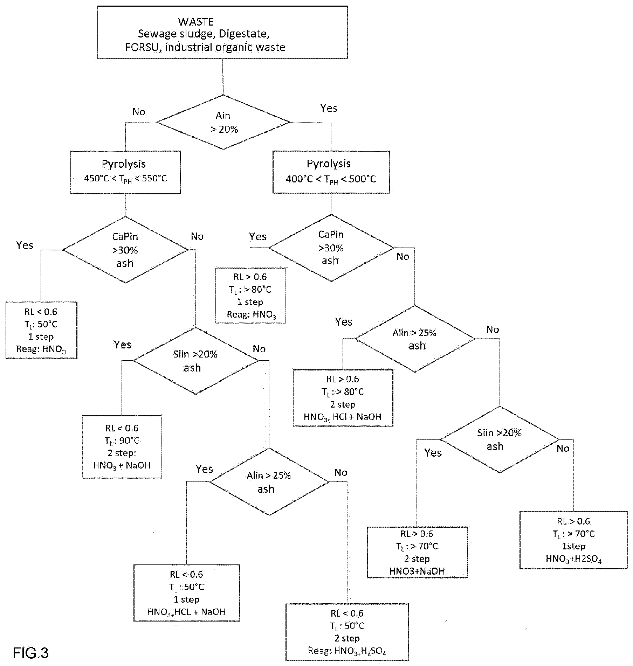

Fig. 3 shows a representation of a decision-making algorithm related to a preferred solution for the control of the main parameters of the process, highlighting the ways in which the system will modulate the process characteristics, in particular the pyrolysis temperature, type and quantity of leaching reagent (grams of reagent per gram of char) and leaching temperature, based on the type and composition of the input matrices.

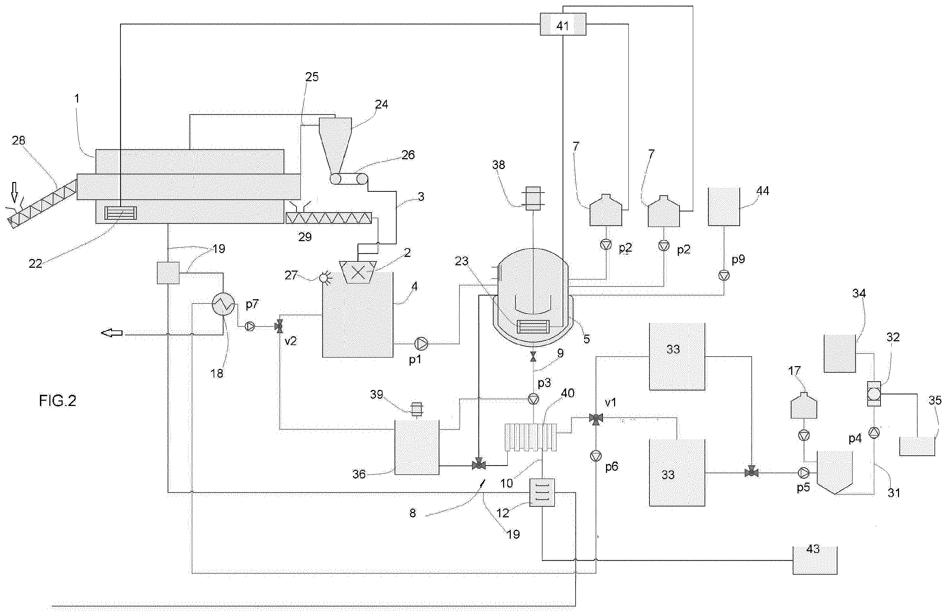

With reference to figure 2, an embodiment example of a plant for the actuation of the integrated thermochemical process of the invention is schematically illustrated.

The plant comprises a pyrolysis reactor 1 provided with heaters 22 for the thermochemical treatment by pyrolysis of the residual matrix fed by a loading auger 28 and discharged from the reactor 1 by means of a discharge auger 29. Preferably, the pyrolysis reactor 1 also comprises a cyclone 24 for recovering the char dust produced by the reactor 1 provided with an aspiration duct 25 of the dust from the reactor and a discharge 26.

Downstream of the discharge 29 and the possible discharge 26, a mill 2 is arranged which receives the pyrolysis char and the recovery dust by means of pipes 3 and performs the grinding of the char received.

Preferably, the mill 2 comprises a spray chilling system 27 which cools the char exiting the reactor 1 from a temperature of about 100°C or higher with water to a temperature close to the process temperature of 50-90°C which at the same time contributes with the char coming from the mill to form a liquid solid mixture formed by water and char contained in a mixing tank 4.

From the tank 4, the liquid solid mixture is in turn sent out, by means of a pump p1 and pipe 6, to a leaching reactor 5 heated and maintained at the process temperature by a heater 23, provided with a stirrer and/or a fluid recirculation system 38.

The hot leaching of the mixture takes place in the reactor 5 with leaching reagents, for example acid reagents, which are introduced into the reactor 5 in a quantity dosed by a pump p2 which withdraws them from one or more dosing tanks 7 according to the leaching phases actuated, and possibly with water coming from a pump p9 from a further tank 44, so as to obtain a leaching mixture.

The leaching mixture is then sent via pipes 9 and a pump p3 to a liquid-solid separator 8 which separates it into a solid phase containing organic recovery carbon and a liquid phase containing inorganic recovery liquid, intended for respective outlets 10, 11.

Preferably, the separator 8 comprises a filter press 40 associated with a washing water container 36 provided with a stirrer 39 and operates in two distinct steps.

In the first step the pump p3 feeds the filter press 40 and from the outlet of the liquid phase 11 the organic recovery liquid is sent via a valve v1 and pipes 16 into a precipitation reactor 13 connected to a tank 17 of a basic reagent. Preferably, the leaching mixture prior to reaching the precipitation reactor 13 is accumulated in one or more liquid tanks 33 which introduce the liquid into the reactor 13 by means of a pump p5.

In the reactor 13 the leaching mixture is subjected to precipitation obtaining solid inorganic material in the mixture which is sent through ducts 31 and a pump p4 to a liquid solid filter 32 connected to a tank 34 of the filtered water and to a collection container 35 of the inorganic precipitate. At the same time, in this first step, the organic carbon separated from the inorganics is sent from the outlet of the solid phase 10 to the washing tank 36 where it is washed in water. In the second step, the pump p3 feeds the filter press 40 with the organic carbon mixed with water contained in the washing tank 36 and sent to a dryer 12 in heat exchange with the combustion gases 19 exiting the pyrolysis reactor 1 to then be collected in a container 43 of recovered dry organic carbon.

The washing water separated from the organic carbon is circulated by the valve v1 and a pump p6 to reach a heat exchanger 18 in heat exchange with the flue gases 19 emitted by the pyrolysis reactor and be returned to the tank 36 by means of a pump p7 and a three-way valve v2.

Preferably, the valve v2 is also connected to the mixing tank 4 to supply part of the water recirculated by the pump p7 and heated by the exchanger 18.

In order to adjust the temperature of the pyrolysis step, the temperature of the leaching step and the dosed quantity of reagents used in leaching, the system further comprises an electrical control panel 41 connected to the heater 22 of the reactor 1 to the heater 23 of the leaching reactor and to the dosing tanks 7 as well as preferably to the pumps and valves used for the execution of the process.

The invention achieves important advantages related to the complete recovery at the end of the process of both organic and inorganic materials contained in the residual matrix and of technical and/or economic value.

Furthermore, the process has proven to be flexible and adaptable to different purposes, since it allows to vary the pyrolysis and leaching conditions (in particular the temperature) in a combined manner to optimize the final object to be obtained in relation to the organic materials contained in the matrix and the reagents used for the leaching step, which can be selected based on the inorganic content of the specific residual matrix treated and the obtainable inorganic recovery products.

## Claims

1. Integrated thermochemical process for the combined recovery of organic carbon and inorganic raw materials from residual matrices comprising organic material and an initial quantity and composition of ash of inorganic materials with a percentage by weight of initial ash (Ain), comprising the following steps
feeding a quantity of residual matrix,
treatment by pyrolysis of the fed residual matrix actuated in a pyrolysis reactor by thermochemical degradation at pyrolysis temperatures (TP) maintained within a process value range between a lower value (T_{PL}) of 400°C and an upper value (T_{PH}) of 550°C with heating speeds not exceeding 40°C/minute and with a residence time between 30min and 2h, preferably between 30min and 1h30min, until obtaining a solid char containing said inorganic raw materials,
cooling and grinding of the solid char from pyrolysis,
mixing the ground char with water and obtaining a water-char mixture , hot leaching in one or more steps of said mixture of water and char at leaching temperatures (TL) by further mixing with a dosed quantity (RL) of leaching reagents and obtaining a leaching mixture,
separating said leaching mixture into a solid phase containing leached char and a liquid phase containing inorganic leaching liquid, **characterized in that**
the process include a preliminary step of composition analysis of said residual matrices,
in said one or more steps of hot leaching a water-char ratio between min 4:1 and 20:1 by weight is processed,
the leaching temperature (TL) of said mixture of water and char is maintained within a process value range between 50°C and 90°C
said dosed quantity (RL) of leaching reagents (RL) comprise HNO3 alone or in combination with H2SO4,
the dosed quantity of leaching reagents (R_{L}) is comprised between a higher relative value (RLH) of 70% and a lower relative value (RLL) of 40% by weight with respect to the processed biochar,
wherein the temperature of said pyrolysis step (TP), the temperature of said leaching step (TL) and the quantity and composition of said mixed leaching reagents (RL) are adjusted based on a threshold value (Ainx) of the percentage by weight of initial ash (Ain) of the initial quantity and composition of ash present in the treated residual matrix and in combination with each other
said threshold value (Ainx) of the percentage by weight of initial ash (Ain) is a percentage by weight lower than 25% on dry basis of said residual matrices.

2. Process according to claim 1, wherein the temperature (TP) of said pyrolysis step, the temperature of said leaching step (TL) and the quantity (RL) and/or the composition of the leaching reagents are adjusted in combination based on the initial quantity of ash (Ain), and/or the initial quantity of Calcium and phosphorus (CaPin) and/or the initial quantity of heavy metals (Min) and/or the initial quantity of Silicon (Siin) and of Aluminium (Alin) present in the treated residual matrix with respect to relative threshold values (Ainx; CaPinx; Minx; Siinx).

3. Process according to claim 1 or 2, wherein the temperature (TP) of said pyrolysis step and/or the temperature of said leaching step (TL) are adjusted to assume a value selected from a respective lower and upper value (TPL, TPH; TLL, TLH) of said process value ranges, so that:
- the pyrolysis temperature is adjusted to assume higher relative values for values of the percentage by weight of initial ash Ain below a threshold value (Ainx);
- the leaching temperature is adjusted to assume assumes lower relative values for higher relative values of the pyrolysis temperature., and
- the pyrolysis temperature is adjusted to assume lower relative values for values of the percentage by weight of initial ash Ain above a threshold value (Ainx);
- the leaching temperature is adjusted to assume higher relative values for lower relative values of the pyrolysis temperature.

4. Process according to any one of the preceding claims, further comprising the following steps:
washing the leached char in water,
drying the leached and washed char and obtaining a dry solid organic carbon,
mixing the leaching liquid with basic reagent and obtaining by complete or selective precipitation the inorganic elements recovered from said residual matrix.

5. Process according to one or more of the preceding claims, wherein said cooling and grinding step occurs by means of spray chilling by means of a sprayer (27) and by means of combined grinding of the char from pyrolysis at a temperature below 100°C up to dimensions of the ground char less than 200 microns.

6. Process according to one or more of the preceding claims, wherein said step of mixing the ground char with water occurs by discharge into a reactor mixed with demineralized water at a temperature between 50°C and 90°C with a water-char ratio between min 4:1 and 20:1.

7. Process according to one or more of the preceding claims, wherein said acid leaching step occurs with a duration between 1and 2 hours, at a temperature between 50°C and 90°C, with a percentage by weight of the leaching reagents between 40% and 70% with respect to the processed solid, preferably equal to 50% and any basic reagents with percentages between 50% and 200% with respect to the processed solid.

8. Process according to one or more of the preceding claims, comprising a step of recovering the heat produced in the pyrolysis step for heating the water introduced into the leaching reactor and for drying the leached char.

9. Process according to claim 1 comprising only one hot leaching step in which said leaching reagent is HNO3.

10. Process according to claim 1, in which the acid leaching step is supplemented with a second phase with a basic reagent for removing silicates and aluminates and obtaining separate leaching products.

11. Plant for actuating an integrated thermochemical process according to one or more of the preceding claims, for the recovery of raw materials from predominantly organic matrices, comprising
a first pyrolysis reactor (1) provided with first heaters (22) for the thermochemical treatment of a predominantly organic residual matrix and obtaining a solid char,
a mill (2) connected to the pyrolysis reactor by first pipes (3) to receive a quantity of solid char and to grind the solid char received,
a mixing tank (4) associated with the mill (2) for receiving and containing a quantity of water and ground char,
a leaching reactor (5) provided with second heaters (23) and connected to the mixing tank (4) by pipes (6) to receive a quantity of water and ground char mixture and to perform hot leaching of the mixture with leaching reagents in a quantity dosed from at least one dosing tank (7), and to obtain a leaching mixture;
a liquid-solid separator (8) connected to outlet pipes (9) from the leaching reactor (5) to receive a quantity of the leaching mixture and separate it into a solid phase containing recovery char and a liquid phase containing inorganic recovery liquid intended for respective outlets (10, 11) of the solid phase and the liquid phase,
a dryer (12) connected to the outlet (10) of the solid phase of the leaching separator to receive a quantity of recovery char and dry it,
a precipitation reactor (13) connected to the outlet (11) of the liquid phase of the leaching separator by pipes (16) to receive a quantity of recovery liquid and to a tank (17) of a basic reagent to obtain by precipitation solid inorganic material recovered from said residual matrix,
at least one heat exchanger (18) configured to receive heat from flue gas emission ducts (19) produced by said first pyrolysis reactor and transfer heat to the mixing liquid into said second leaching reactor (5), and to said dryer (12) in order to recover within the process the heat produced in pyrolysis.
an electrical control panel (41) connected to said first and second heater (22, 23) and to said dosing tank (7) configured to adjust the temperature of said pyrolysis step, the temperature of said leaching step and the dosage of said leaching reagents, according to claim 1.

12. Plant according to claim 11, wherein said mill (2) comprises a cooler (27) of the char exiting the pyrolysis reactor.

13. Plant according to claim 11, wherein said pyrolysis reactor (1) comprises a cyclone (24) for recovering the char dust produced by the reactor (1), provided with an aspiration duct (25) of the dust from the reactor and a discharge (26) for sending the recovered dust to said mill (2).

14. Plant according to one of claims 11 to 13, wherein said separator (8) comprises a filter press (40) associated with a separate organic carbon washing tank (36).

## Patentansprüche

1. Integriertes thermochemisches Verfahren zur kombinierten Rückgewinnung von organischem Kohlenstoff und anorganischen Rohstoffen aus Restmatrizen, die organisches Material und eine anfängliche Menge und Zusammensetzung von Asche anorganischer Materialien mit einem Gewichtsprozentsatz an anfänglicher Asche (Ain) umfassen, das die folgenden Schritten umfasst Einspeisung einer Menge an Restmatrix,
Behandlung der zugeführten Restmatrix durch Pyrolyse in einem Pyrolysereaktor durch thermochemischen Abbau bei Pyrolysetemperaturen (T_{P}), die in einem Prozesswertebereich zwischen einem unteren Wert (T_{PL}) von 400 °C und einem oberen Wert (T_{PH}) von 550 °C gehalten werden, mit Heizgeschwindigkeiten, die 40 °C/min nicht überschreiten, und mit einer Verweilzeit zwischen 30 min und 2 h, vorzugsweise zwischen 30 min und 1 h 30 min, bis zum Erhalt einer festen, die anorganischen Rohstoffe enthaltenden Kohle,
Kühlung und Zerkleinerung der festen Kohle aus der Pyrolyse,
Vermischen der gemahlenen Kohle mit Wasser, um ein Wasser-Kohle-Gemisch zu erhalten,
Heißauslaugung in einem oder mehreren Schritten der Mischung aus Wasser und Holzkohle bei Auslaugungstemperaturen (T_{L}) durch weiteres Mischen mit einer dosierten Menge (R_{L}) von Auslaugungsreagenzien und Erhalt einer Auslaugungsmischung,
Trennen der genannten Auslaugungsmischung in eine feste Phase, die ausgelaugte Kohle enthält, und eine flüssige Phase, die anorganische Auslaugungsflüssigkeit enthält,
**dadurch gekennzeichnet, dass**
das Verfahren einen vorausgehenden Schritt der Analyse der Zusammensetzung der genannten Restmatrizen umfasst,
bei dem in einem oder mehreren Schritten der Heißauslaugung ein Wasser-Kohle-Verhältnis zwischen mindestens 4:1 und 20:1 nach Gewicht verarbeitet wird, die Auslaugungstemperatur (T_{L}) des Gemisches aus Wasser und Holzkohle in einem Prozesswertebereich zwischen 50 °C und 90 °C gehalten wird die dosierte Menge (R_{L}) an Auslaugungsreagenzien (RL) HNO₃ allein oder in Kombination mit H₂SO₄ umfasst,
die dosierte Menge an Auslaugungsreagenzien (R_{L}) zwischen einem höheren relativen Wert (R_{LH}) von 70 % und einem niedrigeren relativen Wert (R_{LL}) von 40 Gew.-%, bezogen auf die verarbeitete Biokohle, liegt,
wobei die Temperatur des Pyrolyseschritts (T_{P}), die Temperatur des Auslaugungsschritts (T_{L}) und die Menge und Zusammensetzung der gemischten Auslaugungsreagenzien (R_{L}) auf der Grundlage eines Schwellenwerts (Ainx) des Gewichtsprozentsatzes der anfänglichen Asche (Ain) der anfänglichen Menge und Zusammensetzung der Asche, die in der behandelten Restmatrix vorhanden ist, eingestellt werden und in Kombination miteinander der Schwellenwert (Aᵢₙₓ) des Gewichtsprozentsatzes der anfänglichen Asche (Ain) ein Gewichtsprozentsatz von weniger als 25 % auf Trockenbasis der Restmatrizen ist.

2. Verfahren nach Anspruch 1, bei dem die Temperatur (T_{P}) des Pyrolyseschritts, die Temperatur des Auslaugungsschritts (T_{L}) und die Menge (R_{L}) und/oder die Zusammensetzung der Auslaugungsreagenzien in Kombination auf der Grundlage der anfänglichen Menge an Asche (Ain) und/oder der anfänglichen Menge an Calcium und Phosphor (CaPin) und/oder der anfänglichen Menge an Schwermetallen (Min) und/oder der anfänglichen Menge an Silizium (Siᵢₙ) und Aluminium (Alᵢₙ), die in der behandelten Restmatrix vorhanden sind, in Bezug auf relative Schwellenwerte (Aᵢₙₓ; CaPᵢₙₓ; Mᵢₙₓ; Siᵢₙₓ) eingestellt werden.

3. Verfahren nach Anspruch 1 oder 2, wobei die Temperatur (T_{P}) des Pyrolyseschritts und/oder die Temperatur des Auslaugungsschritts (T_{L}) so eingestellt werden, dass sie einen Wert annehmen, der aus einem jeweiligen unteren und oberen Wert (TPL, TPH; TLL, TLH) der Prozesswertebereiche ausgewählt wird, sodass:
- die Pyrolysetemperatur so eingestellt wird, dass sie bei Werten des Gewichtsprozentsatzes der Ausgangsasche Aᵢₙ unterhalb eines Schwellenwerts (Aᵢₙₓ) höhere relative Werte annimmt;
- die Auslaugungstemperatur so eingestellt wird, dass sie bei höheren relativen Werten der Pyrolysetemperatur niedrigere relative Werte annimmt, und
- die Pyrolysetemperatur so eingestellt wird, dass sie niedrigere relative Werte annimmt für Werte des Gewichtsprozentsatzes der anfänglichen Asche Aᵢₙ über einem Schwellenwert (Aᵢₙₓ) ;
- die Auslaugungstemperatur wird so angepasst, dass sie höhere relative Werte annimmt für niedrigere relative Werte der Pyrolysetemperatur.

4. Verfahren nach einem der vorhergehenden Ansprüche, das außerdem die folgenden Schritte umfasst:
Waschen der ausgelaugten Holzkohle in Wasser,
Trocknen der ausgelaugten und gewaschenen Kohle und Gewinnung eines trockenen festen organischen Kohlenstoffs,
Mischen der Auslaugungsflüssigkeit mit einem basischen Reagenz und Gewinnung der aus der Restmatrix gewonnenen anorganischen Elemente durch vollständige oder selektive Ausfällung.

5. Verfahren nach einem oder mehreren der vorhergehenden Ansprüche, wobei der Kühl- und Zerkleinerungsschritt durch Sprühkühlung mittels eines Sprühgerätes (27) und durch kombinierte Zerkleinerung der Kohle aus der Pyrolyse bei einer Temperatur unter 100 °C bis zu einer Größe der gemahlenen Kohle von weniger als 200 Mikrometern erfolgt.

6. Verfahren nach einem oder mehreren der vorhergehenden Ansprüche, wobei der Schritt des Mischens der gemahlenen Kohle mit Wasser durch Einleiten in einen Reaktor erfolgt, der mit entmineralisiertem Wasser bei einer Temperatur zwischen 50 °C und 90 °C bei einem Wasser-Kohle-Verhältnis zwischen mindestens 4:1 und 20:1 erfolgt.

7. Verfahren nach einem oder mehreren der vorhergehenden Ansprüche, wobei der Schritt des sauren Auslaugens mit einer Dauer zwischen 1 und 2 Stunden, bei einer Temperatur zwischen 50 °C und 90 °C, mit einem Gewichtsprozentsatz der Auslaugungsreagenzien zwischen 40 % und 70 % in Bezug auf den verarbeiteten Feststoff, vorzugsweise gleich 50 %, und allen basischen Reagenzien mit Prozentsätzen zwischen 50 % und 200 % in Bezug auf den verarbeiteten Feststoff erfolgt.

8. Verfahren nach einem oder mehreren der vorhergehenden Ansprüche, das einen Schritt der Rückgewinnung der im Pyrolyseschritt erzeugten Wärme zum Erhitzen des in den Auslaugungsreaktor eingeleiteten Wassers und zum Trocknen der ausgelaugten Kohle umfasst.

9. Verfahren nach Anspruch 1, das nur einen Heißauslaugungsschritt umfasst, bei dem das Auslaugungsreagenz HNO₃ ist.

10. Verfahren nach Anspruch 1, bei dem der Schritt der sauren Auslaugung durch eine zweite Phase mit einem basischen Reagenz ergänzt wird, um Silikate und Aluminate zu entfernen und getrennte Auslaugungsprodukte zu erhalten.

11. Anlage zum Ausführen eines integrierten thermochemischen Verfahrens nach einem oder mehreren der vorhergehenden Ansprüche zur Rückgewinnung von Rohstoffen aus überwiegend organischen Grundsubstanzen, umfassend
einen ersten Pyrolysereaktor (1), der mit ersten Heizelementen (22) zur thermochemischen Behandlung einer überwiegend organischen Restmatrix und zur Gewinnung von fester Holzkohle versehen ist,
eine Mühle (2), die über erste Rohre (3) mit dem Pyrolysereaktor verbunden ist, um eine Menge an fester Holzkohle aufzunehmen und die aufgenommene feste Holzkohle zu mahlen,
einen mit der Mühle (2) verbundenen Mischtank (4) zur Aufnahme einer Menge an Wasser und gemahlener Kohle, einen Auslaugungsreaktor (5), der mit zweiten Heizelementen (23) versehen und mit dem Mischtank (4) durch Rohre (6) verbunden ist, um eine Menge an Wasser und gemahlener Holzkohlemischung aufzunehmen und eine Heißauslaugung der Mischung mit Auslaugungsreagenzien in einer Menge durchzuführen, die aus mindestens einem Dosiertank (7) dosiert wird, und um eine Auslaugungsmischung zu erhalten;
einen Flüssigkeits-Feststoff-Separator (8), der mit Auslassleitungen (9) des Auslaugungsreaktors (5) verbunden ist, um eine Menge an Auslaugungsmischung aufzunehmen und sie in eine feste Phase, die Rückgewinnungskohle enthält, und eine flüssige Phase, die anorganische Rückgewinnungsflüssigkeit enthält, zu trennen, die für entsprechende Auslässe (10, 11) der festen Phase und der flüssigen Phase bestimmt sind, einen Trockner (12), der mit dem Auslass (10) der festen Phase des Auslaugungsseparators verbunden ist, um eine Menge an Rückgewinnungskohle aufzunehmen und diese zu trocknen,
einen Fällungsreaktor (13), der über Leitungen (16) mit dem Auslass (11) der flüssigen Phase des Auslaugungsseparators verbunden ist, um eine Menge an Rückgewinnungsflüssigkeit aufzunehmen, und mit einem Behälter (17) für ein basisches Reagenz verbunden ist, um durch Fällung festes anorganisches Material zu erhalten, das aus der Restmatrix zurückgewonnen wurde, mindestens einen Wärmetauscher (18), der so konfiguriert ist, dass er Wärme von den Rauchgasabzugskanälen (19), die von dem ersten Pyrolysereaktor erzeugt wird, aufnimmt und Wärme auf die Mischflüssigkeit in den zweiten Auslaugungsreaktor (5) und an den Trockner (12) überträgt, um innerhalb des Verfahrens die bei der Pyrolyse erzeugte Wärme zurückzugewinnen,
eine elektrische Schalttafel (41), die mit dem ersten und zweiten Heizelement (22, 23) und dem Dosiertank (7) verbunden und so konfiguriert ist, dass sie die Temperatur des Pyrolyseschritts, die Temperatur des Auslaugungsschritts und die Dosierung der Auslaugungsreagenzien nach Anspruch 1 einstellt.

12. Anlage nach Anspruch 11, wobei die Mühle (2) einen Kühler (27) für die aus dem Pyrolysereaktor austretende Kohle umfasst.

13. Anlage nach Anspruch 11, wobei der Pyrolysereaktor (1) einen Zyklonabscheider (24) zur Rückgewinnung des vom Reaktor (1) erzeugten Holzkohlenstaubs umfasst, der mit einer Absaugleitung (25) für den Staub aus dem Reaktor und einem Auslass (26) zur Weiterleitung des rückgewonnenen Staubs an die Mühle (2) versehen ist.

14. Anlage nach einem der Ansprüche 11 bis 13, wobei der Separator (8) eine Filterpresse (40) umfasst, die mit einem separaten Waschtank (36) für organischen Kohlenstoff verbunden ist.

## Revendications

1. Procédé thermochimique intégré pour la récupération combinée de carbone organique et de matières premières inorganiques à partir de matrices résiduelles comprenant une matière organique et une quantité initiale et une composition de cendres de matières inorganiques avec un pourcentage en poids de cendres initiales (Ain), comprenant les étapes suivantes
la fourniture d'une quantité de matrice résiduelle,
le traitement par pyrolyse de la matrice résiduelle fournie mis en œuvre dans un réacteur de pyrolyse par dégradation thermochimique à des températures de pyrolyse (TP) maintenues dans une plage de valeurs de procédé entre une valeur inférieure (T_{PL}) de 400 °C et une valeur supérieure (T_{PH}) de 550 °C avec des vitesses de chauffage ne dépassant pas 40 °C/minute et avec un temps de séjour entre 30 min et 2 h, de préférence entre 30 min et 1 h 30 min, jusqu'à l'obtention d'un charbon solide contenant lesdites matières premières inorganiques, le refroidissement et le broyage du charbon solide issu de la pyrolyse,
le mélange du charbon broyé avec de l'eau et l'obtention d'un mélange eau-charbon,
la lixiviation à chaud dans une ou plusieurs étapes dudit mélange d'eau et de charbon à des températures de lixiviation (TL) en mélangeant davantage avec une quantité dosée (RL) de réactifs de lixiviation et en obtenant un mélange de lixiviation,
la séparation dudit mélange de lixiviation en une phase solide contenant un charbon lixivié et en une phase liquide contenant un liquide de lixiviation inorganique, **caractérisé en ce que**
le procédé comprend une étape préliminaire d'analyse de composition desdites matrices résiduelles,
dans lesdites une ou plusieurs étapes de lixiviation à chaud, un rapport eau-charbon entre min 4:1 et 20:1 en poids est traité,
la température de lixiviation (TL) dudit mélange d'eau et de charbon est maintenue dans une plage de valeur de procédé entre 50 °C et 90 °C
ladite quantité dosée (RL) de réactifs de lixiviation (R_{L}) comprend HNO3 seul ou en combinaison avec H2SO4,
ladite quantité dosée de réactifs de lixiviation (R_{L}) est comprise entre une valeur relative supérieure (RLH) de 70 % et une valeur relative inférieure (RLL) de 40 % en poids par rapport au biocharbon traité,
dans lequel la température de ladite étape de pyrolyse (TP), la température de ladite étape de lixiviation (TL) et la quantité et la composition desdits réactifs de lixiviation (RL) mélangés sont ajustées sur la base d'une valeur seuil (Ainx) du pourcentage en poids de cendres initiales (Ain) de la quantité initiale et de la composition des cendres présentes dans la matrice résiduelle traitée et en combinaison les uns avec les autres
ladite valeur seuil (Ainx) du pourcentage en poids de cendres initiales (Ain) est un pourcentage en poids inférieur à 25 % sur une base sèche desdites matrices résiduelles.

2. Procédé selon la revendication 1, dans lequel la température (TP) de ladite étape de pyrolyse, la température de ladite étape de lixiviation (TL) et la quantité (RL) et/ou la composition des réactifs de lixiviation sont ajustées en combinaison sur la base de la quantité initiale de cendres (Ain), et/ou de la quantité initiale de calcium et de phosphore (CaPin) et/ou de la quantité initiale de métaux lourds (Min) et/ou de la quantité initiale de silicium (Siin) et d'aluminium (Alin) présentes dans la matrice résiduelle traitée par rapport à des valeurs seuils relatives (Aᵢₙₓ ; CaPᵢₙₓ ; Mᵢₙₓ ; Siᵢₙₓ).

3. Procédé selon la revendication 1 ou 2, dans lequel la température (TP) de ladite étape de pyrolyse et/ou la température de ladite étape de lixiviation (TL) sont ajustées pour prendre une valeur sélectionnée parmi une valeur inférieure et une valeur supérieure (TPL, TPH ; TLL, TLH) respectives desdites plages de valeurs de procédé, de sorte que :
- la température de pyrolyse est ajustée pour prendre des valeurs relatives plus élevées pour des valeurs du pourcentage en poids de cendres initiales Ain inférieures à une valeur seuil (Ainx) ;
- la température de lixiviation est ajustée pour prendre des valeurs relatives plus basses pour des valeurs relatives plus élevées de la température de pyrolyse, et
- la température de pyrolyse est ajustée pour prendre des valeurs relatives plus basses pour des valeurs du pourcentage en poids de cendres initiales Ain supérieures à une valeur seuil (Ainx) ;
- la température de lixiviation est ajustée pour prendre des valeurs relatives plus élevées pour des valeurs relatives plus basses de la température de pyrolyse.

4. Procédé selon l'une quelconque des revendications précédentes, comprenant en outre les étapes suivantes :
le lavage du charbon lixivié dans de l'eau,
le séchage du charbon lixivié et lavé et l'obtention d'un carbone organique solide sec,
le mélange du liquide de lixiviation avec un réactif basique et l'obtention par précipitation complète ou sélective des éléments inorganiques récupérés à partir de ladite matrice résiduelle.

5. Procédé selon une ou plusieurs des revendications précédentes, dans lequel ladite étape de refroidissement et de broyage a lieu au moyen d'un refroidissement par pulvérisation au moyen d'un pulvérisateur (27) et au moyen d'un broyage combiné du charbon issu de la pyrolyse à une température inférieure à 100 °C jusqu'à des dimensions du charbon broyé inférieures à 200 microns.

6. Procédé selon une ou plusieurs des revendications précédentes, dans lequel ladite étape de mélange du charbon broyé avec de l'eau a lieu par déchargement dans un réacteur mélangé avec de l'eau déminéralisée à une température entre 50 °C et 90 °C avec un rapport eau-charbon entre min 4:1 et 20:1.

7. Procédé selon une ou plusieurs des revendications précédentes, dans lequel ladite étape de lixiviation acide a lieu pendant une durée entre 1 et 2 heures, à une température entre 50 °C et 90 °C, avec un pourcentage en poids des réactifs de lixiviation entre 40 % et 70 % par rapport au solide traité, de préférence égal à 50 % et n'importe quels réactifs basiques avec des pourcentages entre 50 % et 200 % par rapport au solide traité.

8. Procédé selon une ou plusieurs des revendications précédentes, comprenant une étape de récupération de la chaleur produite dans l'étape de pyrolyse pour chauffer l'eau introduite dans le réacteur de lixiviation et pour sécher le charbon lixivié.

9. Procédé selon la revendication 1, comprenant uniquement une étape de lixiviation à chaud dans laquelle ledit réactif de lixiviation est HNO3.

10. Procédé selon la revendication 1, dans lequel l'étape de lixiviation acide est complétée d'une seconde phase avec un réactif basique pour éliminer les silicates et les aluminates et obtenir des produits de lixiviation séparés.

11. Installation pour mettre en œuvre un procédé thermochimique intégré selon une ou plusieurs des revendications précédentes, pour la récupération de matières premières à partir de matrices principalement organiques, comprenant
un premier réacteur de pyrolyse (1) pourvu de premiers réchauffeurs (22) pour le traitement thermochimique d'une matrice résiduelle principalement organique et l'obtention d'un charbon solide,
un broyeur (2) relié au réacteur de pyrolyse par des premiers tuyaux (3) pour recevoir une quantité de charbon solide et pour broyer le charbon solide reçu,
une cuve de mélange (4) associée au broyeur (2) pour recevoir et contenir une quantité d'eau et de charbon broyé,
un réacteur de lixiviation (5) pourvu de seconds réchauffeurs (23) et relié à la cuve de mélange (4) par des tuyaux (6) pour recevoir une quantité de mélange d'eau et de charbon broyé et pour effectuer une lixiviation à chaud du mélange avec des réactifs de lixiviation en une quantité dosée à partir d'au moins une cuve de dosage (7), et pour obtenir un mélange de lixiviation ;
un séparateur liquide-solide (8) relié à des tuyaux de sortie (9) provenant du réacteur de lixiviation (5) pour recevoir une quantité du mélange de lixiviation et le séparer en une phase solide contenant du charbon de récupération et en une phase liquide contenant un liquide inorganique de récupération destiné à des sorties (10, 11) respectives de la phase solide et de la phase liquide,
un sécheur (12) relié à la sortie (10) de la phase solide du séparateur de lixiviation pour recevoir une quantité de charbon de récupération et le sécher,
un réacteur de précipitation (13) relié à la sortie (11) de la phase liquide du séparateur de lixiviation par des tuyaux (16) pour recevoir une quantité de liquide de récupération et à une cuve (17) d'un réactif basique pour obtenir par précipitation une matière inorganique solide récupérée à partir de ladite matrice résiduelle,
au moins un échangeur de chaleur (18) configuré pour recevoir la chaleur provenant de conduits d'émission de gaz de combustion (19) produite par ledit premier réacteur de pyrolyse et transférer la chaleur au liquide de mélange dans ledit second réacteur de lixiviation (5), et audit sécheur (12) afin de récupérer au sein du procédé la chaleur produite lors de la pyrolyse,
un panneau de commande électrique (41) connecté auxdits premier et second réchauffeurs (22, 23) et à ladite cuve de dosage (7) configuré pour ajuster la température de ladite étape de pyrolyse, la température de ladite étape de lixiviation et le dosage desdits réactifs de lixiviation, selon la revendication 1.

12. Installation selon la revendication 11, dans laquelle ledit broyeur (2) comprend un refroidisseur (27) du charbon sortant du réacteur de pyrolyse.

13. Installation selon la revendication 11, dans laquelle ledit réacteur de pyrolyse (1) comprend un cyclone (24) pour récupérer les poussières de charbon produites par le réacteur (1), pourvu d'un conduit d'aspiration (25) des poussières provenant du réacteur et d'une évacuation (26) pour envoyer les poussières récupérées vers ledit broyeur (2).

14. Installation selon l'une des revendications 11 à 13, dans laquelle ledit séparateur (8) comprend un filtre-presse (40) associé à une cuve de lavage de charbon organique séparé (36).
